# EUROPÄISCHE PATENTSCHRIFT

(11) **EP 1 216 141 B1**
(45) Veröffentlichungstag und Bekanntmachung des Hinweises auf die Patenterteilung: **05.04.2006**
(21) Anmeldenummer: 00967644.6
(22) Anmeldetag: 02.09.2000
(51) Int. Cl.: B29C 71/04, B29C 65/02, C08J 5/12

(54) **VERFAHREN ZUM FREMDSTOFFFREIEN VERBINDEN VON ZWEI WERKSTÜCKEN AUS KUNSTSTOFF**
METHOD FOR LINKING TWO PLASTIC WORK PIECES WITHOUT USING FOREIGN MATTER
PROCEDE PERMETTANT DE RELIER SANS CORPS ETRANGER DEUX PIECES EN PLASTIQUE

(30) Priorität: 23.09.1999 DE 19945604
(43) Veröffentlichungstag der Anmeldung: 26.06.2002
(73) Patentinhaber: Aclara BioSciences, Inc., Mountain View, CA 94043-1432 (US)
(72) Erfinder: NEYER, Andreas, 58638 Iserlohn (DE); JÖHNCK, Matthias, 48163 Münster (DE)
(74) Vertreter: Vossius & Partner
(86) Internationale Anmeldenummer: PCT/EP2000/008584
(87) Internationale Veröffentlichungsnummer: WO 2001/021384

(56) Entgegenhaltungen:
- EP-A- 0 589 351
- WO-A-94/29400
- WO-A-99/51422
- US-A- 3 997 386
- US-A- 4 447 488
- US-A- 5 589 860
- SCHÖSSER A. ET AL: "Optical components in polymers" 12. Juli 1995 (1995-07-12) , PROCEEDINGS OF THE SPIE,US,SPIE, BELLINGHAM, VA, VOL. 2540, PAGES 110-117 XP002142807 in der Anmeldung erwähnt Seite 110, letzter Absatz

## Beschreibung

Die Erfindung betrifft ein Verfahren zum fremdstofffreien Verbinden von zwei aneinandergrenzenden Werkstücken aus Kunststoff. Ferner betrifft die Erfindung einen aus zumindest zwei, miteinander fremdstofffrei verbundenen Werkstücken gebildeten Gegenstand, hergestellt nach einem solchen Verfahren, sowie eine bevorzugte Verwendung eines solchen Gegenstandes.

Derartige Verfahren werden beispielsweise zum Verbinden mikrostrukturierter Werkstücke eingesetzt und gewinnen eine zunehmende Bedeutung im Bereich der Mikrofluidik für Anwendungen in der Reaktions- und Analysentechnik, der Dosier- und Filtrationstechnik als auch in der Hydraulik und Pneumatik. Für solche Anwendungen wurden in der jüngeren Vergangenheit zahlreiche miniaturisierte Systeme entwickelt. Verwendete Materialien sind im wesentlichen Glas und Silizium sowie Thermoplaste. Unabhängig vom verwendeten Material werden zur Herstellung geschlossener Kanäle zunächst in eine Ebene Mikrostrukturen eingebracht (Substratherstellung), welche in einem folgenden Prozeßschritt mit einem Deckel verschlossen werden. Während für Glas und Silizium mit dem Verfahren des anodischen Bondens hierzu eine geeignete Technik zur Verfügung steht, wird an geeigneten kostengünstigen Verfahren zur Verbindung mikrostrukturierter Werkstücke aus Kunststoff weltweit intensiv gearbeitet. Übliche Verbindungs- bzw. Verklebemethoden, wie z.B. das Verwenden von Klebstoffen bzw. Heißklebem, das klassische thermische Verschweißen, das Laser-Schweißen oder das Ultraschallschweißen sind bei den hohen Anforderungen an Struktur- und Formstabilität im Bereich der Mikrotechnik bei Einsatz von Kunststoffen problematisch. Insbesondere das Einbringen von Dünnschichtelektroden z.B. für die Generierung eines lonenflusses oder für Detektionszwecke in einen Fluidikkanal, welche einerseits von außen leicht kontaktierbar, andererseits aber direkten Kontakt zum Medium in den geschlossenen Kanälen haben sollen, ist problematisch, da die Dünnschichtelektroden bei dem Verschweißungsprozess unmerklich und ungewollt beschichtet werden können.

Aus der WO 99/51422 ist ein Verfahren bekannt, welches von dem klassischen thermischen Verschweißen abgeleitet ist, um Kunststoff Biochips mit mikro- bzw. nanostrukturierten Hohlräumen herzustellen. Bei diesem Verfahren ist in die Kontaktfläche des einen Werkstückes die Mikro- bzw. Nanostruktur eingebracht, während das andere Werkstück als Deckel dient. Zum Verbinden der beiden Werkstücke und somit zum Verschließen der Strukturierung des einen Werkstückes werden beide Werkstücke bestimmungsgemäß aufeinander gelegt und zwischen zwei Glasplatten verspannt. Anschließend wird unter Beibehaltung eines Pressdruckes die gesamte Anordnung für eine bestimmte Zeit auf eine Temperatur erwärmt, die nur geringfügig oberhalb der Glasübergangstemperatur des als Werkstück eingesetzten Kunststoffes (Polymeres) liegt. Anschließend wird die Anordnung langsam abgekühlt. Problematisch ist bei diesem Verfahren, daß die in das eine Werkstück eingebrachten Mikro- bzw. Nanostrukturen durch gegebenenfalls zu starkes Aufschmelzen verschlossen werden könnnen, so daß der damit hergestellte Kunststoff-Biochip unbrauchbar ist.

In EP 0 738 306 A1 wird ein Verfahren zum Verschließen von polymeren Mikrokanalstrukturen beschrieben. Bei diesem Verfahren, welches vom Schmelzklebeverfahren abgeleitet wurde, wird ein gelöster Thermoplast auf eines oder auf beide zu verbindende Polymerwerkstücke aufgeschleudert. Das Lösungsmittel verdampft hierbei und zurück bleibt auf dem gesamten Bauteil ein sehr dünner Film des aufgeschleuderten Thermoplasten, welcher eine geringere Schmelztemperatur als das Substrat- bzw. Deckelmaterial hat. Die Verbindung erfolgt durch Zusammendrücken und Aufheizen auf Temperaturen, die unterhalb der Glasübergangstemperatur des Substrat- und Deckelmaterials aber oberhalb der Glasübergangstemperatur der aufgeschleuderten Thermoplasten liegen.

Nachteilig bei dem in dem vorgenannten Dokument beschriebenen Verfahren ist, daß das Lösungsmittel des aufgeschleuderten Polymeres empfindliche Mikro- bzw. Nanostrukturen durch An- bzw. Auflösen zerstören kann. Ferner besteht die Gefahr, daß Korrosionsrisse in den Mikrostrukturen entstehen können. Überdies können durch den Prozeß des Aufschleuderns Mikro- bzw. Nanostrukturen verstopft werden. Die somit hergestellte Fluidikstruktur ist anschließend unbrauchbar. Ebenfalls besteht die Gefahr, daß vorhandene Dünnschichtelektroden beschichtet werden.

Ausgehend von dem diskutierten Stand der Technik liegt der Erfindung daher die Aufgabe zugrunde, ein eingangs genanntes Verfahren zur Verfügung zu stellen, mit dem zwei Werkstücke aus Kunststoff bei dem mindestens ein Werlestüde in der Kontaktfläche Mikro- und/oder Nanostruktur-Vertiefungen aufweist auf kostengünstige Art und Weise und auch in einem Endlosfertigungsprozeß miteinander verbunden werden können.

Diese Aufgabe wird erfindungsgemäß dadurch gelöst, daß
- die vorgesehene Kontaktfläche zumindest eines der beiden Werkstükke, mit der dieses in der Verbindung an das andere Werkstück grenzt, wenigstens bereichsweise einer solchen energiereichen Strahlung ausgesetzt wird, daß die Glasübergangstemperatur in einer Randschicht abgesenkt wird,
- die beiden Werkstücke in ihre bestimmungsgemäße Position zueinander gebracht werden und
- anschließend zum Herstellen der Verbindung der beiden Werkstücke zumindest die durch den Bestrahlungsvorgang jeweils modifizierte Randschicht wenigstens im Bereich ihrer Oberfläche auf eine Temperatur erwärmt wird, die oberhalb der Glasübergangstemperatur der durch die Bestrahlung modifizierten Randschicht, jedoch unterhalb der Glasübergangstemperatur der diesbezüglich unmodifizierten Bereiche des jeweiligen Werkstückes liegt,
so daß die Mikro- und/oder Nanostruktur Vertiefungen ihre Formstabilität beibehalten.

Bei dem erfindungsgemäßen Verfahren wird zumindest die Kontaktfläche eines der beiden Werkstücke, mit der dieses Werkstück in seiner Verbindung zu einem späteren Zeitpunkt an das andere Werkstück grenzt in einer Randschicht dergestalt modifiziert, daß die Glasübergangstemperatur in dieser Randschicht gegenüber den übrigen Anteilen dieses Werkstükkes abgesenkt ist. Dies erfolgt durch Bestrahlen der Kontaktfläche mit einer energiereichen Strahlung, beispielsweise einer UV-, Laser-, Röntgen- und/oder Synchrotonstrahlung. Bei diesem Bestrahlungsprozeß erfolgt eine Zerstörung der langkettigen Polymere, was eine Verringerung des Molekulargewichts und somit eine Erniedrigung der Glasübergangstemperatur zur Folge hat. Die Intensität und Dauer der Bestrahlung sind abhängig von dem zu modifizierenden Kunststoff sowie von der gewünschten Stärke der zu modifizierenden Randschicht. Die Dicke bzw.Tiefe der modifizierten Randschicht kann nur wenige µm oder auch nur Bruchteile davon betragen.

In einem nachgeschalteten Verfahrensschritt werden die beiden Werkstücke in ihre bestimmungsgemäße Position zueinander gebracht. Dies kann unmittelbar im Anschluß an den Bestrahlungsprozeß oder auch zu einem beliebigen späteren Zeitpunkt erfolgen.

Sind die beiden Werkstücke in ihre bestimmungsgemäße Position zueinander gebracht, erfolgt in einem nächsten Verfahrensschritt - dem eigentlichen Schritt des Bonding - eine Erwärmung zumindest der oberflächlichen Bereiche der modifizierten Randschicht auf eine solche Temperatur, die oberhalb der Glasübergangstemperatur der modifizierten Randschicht, jedoch unterhalb der Glasübergangstemperatur des diesbezüglich unmodifizierten Werkstücks liegt. Durch den Prozeß des Erwärmens der modifizierten Randschicht, zumindest ihrer oberflächlichen Bereiche über ihre Glasübergangstemperatur verbinden sich diese erweichten Randbereiche mit der Kontaktfläche des angrenzenden weiteren Werkstückes. Zum Durchführen dieses Erwärmungsschrittes kann entweder selektiv die modifizierte Randschicht oder entsprechende Abschnitte davon erwärmt werden, wie dies beispielsweise möglich ist durch Bestrahlen mit einer Mikrowellenstrahlung, wenn die Randschicht entsprechend dotiert ist oder dadurch, daß die beiden Werkstücke in ihrer bestimmungsgemäßen Position zueinander insgesamt erwärmt werden.

Die Vorteile dieses Verfahrens liegen insbesondere darin, daß die Verbindung zwischen den beiden Werkstücken fremdstofffrei und somit insbesondere klebstoff- und/oder lösungsmittelfrei erfolgt. Überdies kann die Dicke der modifizierten Randschicht so eingestellt sein, daß diese wesentlich geringer ist als die Tiefe einer Mikro- oder Nanostruktur, so daß keine Gefahr besteht, daß bei dem Bonding-Prozeß ein Material in eine solche Struktur einfließt und diese verstopft. Auch können die beiden in ihre bestimmungsgemäße Position zueinander gebrachten Werkstücke bei dem Schritt des Erwärmens der modifizierten Randschicht unter einem Preßdruck zueinander gehalten werden, da die nicht modifizierten und die Strukturen enthaltenden Bereiche nicht erweicht werden und somit formstabil verbleiben. Überdies eignet sich dieses Verfahren zum Herstellen endlos gefertigter Gegenstände aus zwei Werkstücken, etwa zum Verbinden von zwei Folien, da sowohl der Prozeß des Bestrahlens und des zueinander Einrichtens als auch der Prozeß des Erwärmens kontinuierlich etwa bei Einsatz von Folien durchgeführt werden kann.

Die Mikro- oder Nanostruktur können in einem vorgeschalteten Verfahrensschritt in eines der beiden Werkstücke eingebracht werden.

Zum Durchführen des Verfahrens kann ebenfalls vorgesehen sein, daß die Kontaktflächen von beiden Werkstücken dem Prozeß des Bestrahlens unterworfen werden, um jeweils eine solche modifizierte Randzone mit einer erniedrigten Glasübergangstemperatur bereitzustellen, so daß bei dem Schritt des Erwärmens beide modifizierten Randschichten erweicht werden und miteinander verschmelzen.

Das erfindungsgemäße Verfahren eignet sich insbesondere auch zum Verbinden von zwei aneinandergrenzenden Werkstücken aus Kunststoff, wenn die Kontaktfläche eines Werkstückes eine Elektrode, etwa eine strukturierte Dünnschichtelektrode trägt. Durch die Begrenzung der bei dem Verbindungsprozeß verfügten Materialmenge, die auf ein Minimum beschränkt sein kann, besteht bei diesem Verfahren im Gegensatz zum vorbekannten Stand der Technik auch nicht die Gefahr, daß die Elektroden durch flüchtige Bestandteile oder durch aufgeschmolzenes Material bedeckt werden. Weiterhin besteht im Fall, daß beide Werkstücke dem Prozeß des Bestrahlens ausgesetzt sind, der Vorteil, daß der Untergrund unter den Elektroden nicht modifiziert und damit thermisch formstabil bleibt. Damit wird die Elektrode während des Verbindungsvorgangs keiner großen mechanischen Belastung ausgesetzt, wie es bei sonstigen thermischen Verbindungsverfahren durch Nachgeben des erweichten Untergrundes möglich ist, und weist daher keine Beschädigungen bzw. Zerstörungen durch Rißbildung auf.

Nachfolgend ist der Gegenstand der Erfindung anhand eines Ausführungsbeispieles unter Bezugnahme auf die beigefügten Figuren erläutert. Es zeigen:
- **Fig. 1:**: Eine schematisierte dreidimensionale Ansicht eines Mikrofluidelements hergestellt aus zwei Werkstücken nach Art einer Explosionsdarstellung,
- **Fig. 2:**: Das eine, mikrostrukturelle Vertiefungen aufweisende Werkstück der Figur 1 in einem ersten Verfahrensschritt,
- **Fig. 3:**: Das Werkstück der Figur 2 nach Beendigung des ersten Verfahrensschrittes mit einer modifizierten Randschicht,
- **Fig. 4:**: Die beiden in ihre bestimmungsgemäße Position zueinander gebrachten einzelnen Werkstücke der Figur 1,
- **Fig. 5:**: Die miteinander verbundenen Werkstücke der Figur 4 und
- **Fig. 6:**: Einen schematisierten Querschnitt durch ein weiteres Mikrofluidelement mit integrierten Dünnschichtelektroden.

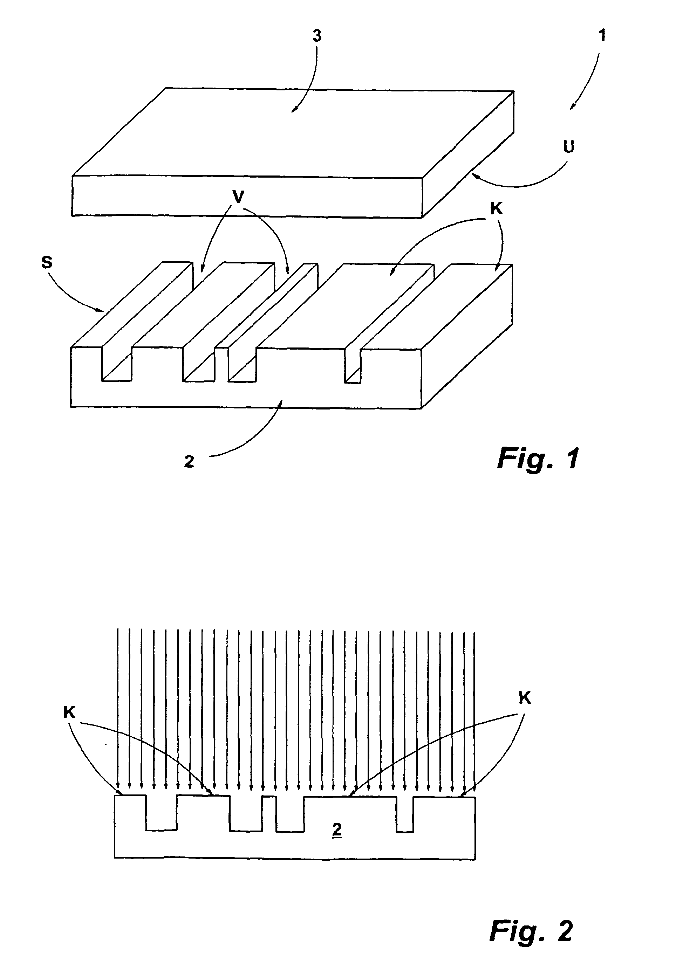

Ein Mikrofluidelement 1, von dem in Figur 1 ein Ausschnitt dargestellt ist, besteht aus zwei Werkstücken 2, 3, die miteinander verbunden das Mikrofluidelement 1 bilden. Bei den Werkstücken 2 und 3 handelt es sich um Folien jeweils eines Thermoplasten, beispielsweise einem Polymethylmethacrylat (PMMA). Ohne weiteres können die Thermoplasten jedoch auch aus Polycarbonat oder einem Polymethacryl bestehen. Generell kann jedoch jeder Kunststoff verwendet werden, dessen Oberfläche unter Einwirkung von energiereicher Strahlung so modifiziert werden kann, daß die Glasübergangstemperatur der modifizierten Schicht unter der der Ausgangswerkstoffe liegt. In die Oberseite des Werkstückes 2 sind kanalartige Vertiefungen V eingebracht, so daß die Oberfläche des Werkstückes 2 strukturiert ist. Die die Vertiefungen voneinander trennenden Stege S, deren Oberseiten jeweils in derselben Ebene angeordnet sind, bilden zusammen einzelne Kontaktflächen K aus, an die angrenzend bei dem fertiggestellten Mikrofluidelement 1 die als Kontaktfläche dienende Unterseite U des Werkstückes 3 grenzt. Somit dient das Werkstück 3 als Deckel zum Verschließen der Vertiefungen V des Werkstückes 2, damit diese Kanäle bilden.

Zum Verbinden der beiden Werkstücke 2, 3 ist in einem ersten Schritt vorgesehen, daß die Kontaktflächen der beiden Werkstückes 2, 3, wie in Figur 2 allein anhand des Werkstückes 2 gezeigt, durch eine energiereiche Strahlung - durch die Pfeile symbolisiert - bestrahlt werden, um in einer an die Oberfläche grenzenden Randschicht eine Absenkung der Glasübergangstemperatur zu erzielen.

Bevorzugterweise wird in dem hier beschriebenen Ausführungsbeispiel zur Modifizierung der PMMA-Oberfläche UV-Strahlung im Wellenlängenbereich von 250-280 nm verwendet. Hierzu können praktisch alle Quecksilberdampflampen verwendet werden, deren Lampengehäuse im entsprechenden Wellenlängenbereich transparent sind. Die notwendigen Bestrahlungsdauem sind abhängig von der Lampenintensität. Der Zusammenhang zwischen Intensität und Tiefe der Schädigung bei Bestrahlung von PMMA mit einer entsprechenden UV-Quelle ist in Frank et al. (W.F.X. Frank, B. Knödler, A. Schösser, T.K. Strempel, T. Tschudi, F. Linde, D. Muschert, A. Stelmszyk, H. Strack, A. Bräuer, P. Dannberg, R. Göring, "Waveguides in Polymers", Proceedings SPIE Vol. 2290, 1994, pp.125-132) detailliert beschrieben.

Die Erniedrigung der Glasübergangstemperatur am Beispiel von PMMA beträgt rund 35°C, so daß die Glasübergangstemperatur auch bei dem beschriebenen Ausführungsbeispiel von 105°C auf 70°C abgesenkt worden ist.

Für PMMA als Werkstückmaterial ist die Bestrahlung mit UV-Licht (A. Schösser, B. Knödler, T. Tschudi, W.F.X. Frank, A. Stelmaszyk, D. Muschert, D. Rück, S. Brunner, F. Pozzi, S. Morasca, C. de Bemardi, "Optical components in polymers", SPIE vol. 2540, pp 110-117) als auch mit Röntgen-Strahlung (LIGA-Verfahren, W.Menz, J.Mohr, "Mikrosystemtechnik für Ingenieure", VCH-Verlag Weinheim, 1997) detailliert untersucht worden. Demzufolge bedingt die Bestrahlung im wesentlichen eine Reduzierung des Molekulargewichtes von PMMA.

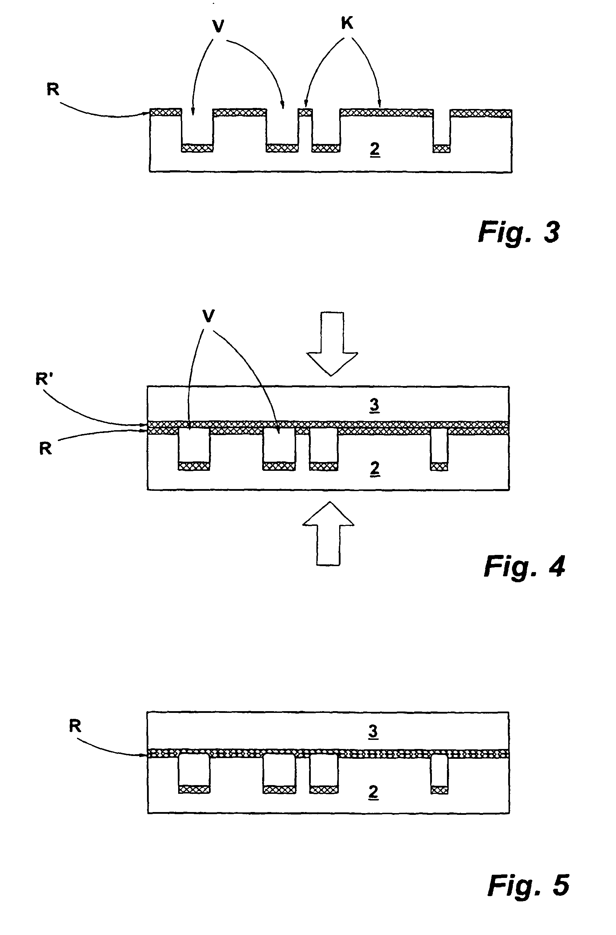

Die durch den Bestrahlungsprozeß modifizierte Randschicht R des Werkstückes 2 ist in Figur 3 dargestellt; entsprecht ist die modifizierte Randschicht des Werkstückes 3 ausgebildet. Aus der Darstellung wird deutlich, daß nicht nur die Kontaktflächen K oberseitig eine modifizierte Randschicht R aufweisen, sondem auch daß das Tiefste der Vertiefungen V eine entsprechende Randschicht aufweist. Letzteres ist jedoch für das Verfahren zum Verbinden der letzten Werkstücke 2, 3 miteinander ohne Relevanz. Auch ist dadurch die Verwendbarkeit des später gebildeten Kanales unbeeinträchtigt. Anstelle einer ganzflächigen Bestrahlung der Oberseite des Werkstückes 2, wie in Figur 2 gezeigt, kann ebenfalls eine selektive Bestrahlung, beispielsweise durch Einsatz einer Maske erfolgen, wenn nur die Randschichten einzelner Bereiche, beispielsweise nur der Kontaktflächen K in der beschriebenen Art modifiziert werden sollen.

Zum Verbinden der beiden Werkstücke 2, 3 miteinander wird in einem nächsten Schritt das als Deckel dienende Werkstück 3 mit seiner ebenfalls modifizierten Randschicht R' auf die Kontaktflächen K des Werkstükkes 2 aufgesetzt, so daß die Vertiefungen V verschlossen sind und diese nunmehr Fluid-Kanäle darstellen. Zweckmäßigerweise sind die beiden Werkstücke 2, 3 in dieser Situation zueinander fixiert, wie dies durch die beiden gegeneinander gerichteten Pfeile schematisiert dargestellt ist.

Um letztendlich eine chemische Verbindung zwischen den beiden Werkstücken 2, 3 herbeizuführen, werden diese auf eine Temperatur erwärmt, die oberhalb der Glasübergangstemperatur der modifizierten Randschichten R, R', jedoch unterhalb der Glasübergangstemperatur der diesbezüglich unmodifizierten Bereiche der Werkstücke 2, 3 liegt. In dem dargestellten Ausführungsbeispiel werden die Werkstücke 2, 3 auf eine Temperatur von etwa 90°C erwärmt. Nach Überschreiben der Glasübergangstemperatur der modifizierten Randschichten R, R' (70°C) erweicht diese, so daß die beiden modifizierten Randschichten R, R' miteinander verschmelzen. Wird zusätzlich wie in den Figuren 4 und 5 dargestellt, ein gegeneinander gerichteter Preßdruck auf die beiden Werkstücke 2, 3 ausgeübt, wird dieser Verbindungsprozeß begünstigt. Nach einem Abkühlen unter die Glasübergangstemperatur sind die Werkstücke 2, 3 miteinander verbunden. Die ehemalige Kontaktfläche zwischen den beiden Werkstükken 2, 3 ist in Figur 5 gestrichelt dargestellt.

Es ist herauszustellen, daß bei diesem Erwärmungsprozeß die Glasübergangstemperatur der unmodifizierten Werkstückabschnitte nicht überschritten wird und diese ihre Formstabilität beibehalten und somit nicht die Gefahr besteht, daß bei dem Verbindungsprozeß die Vertiefungen V verquetscht oder verfüllt werden.

Bei der Ausbildung von mikrostrukturierten Bauteilen ist es zweckmäßig, wenn die beiden Werkstücke 2, 3 aus demselben Material - wie in dem dargelegten Ausführungsbeispiel vorgesehen - bestehen, da die Seitenwände der gebildeten Kanäle umfänglich aufgrund des homogenen Materiales gleiche Oberflächeneigenschaften aufweisen. Die fremdstofffreie Verbindung der beiden Werkstücke 2, 3 und ihre Materialidentität hat auch zur Folge, daß die Verbindungsfläche keine potentielle Schwachstelle darstellt, etwa bei einer thermischen Beanspruchung durch unterschiedliche Ausdehnungskoeffizienten unterschiedlicher Materialien.

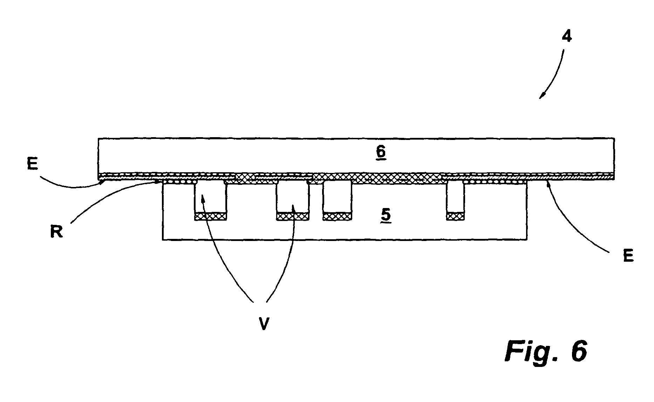

Figur 6 zeigt ein weiteres Mikrofluidelement 4, welches durch Verbinden von zwei Werkstücken 5, 6, die ebenfalls aus jeweils einer PMMA-Folie hergestellt sind, gebildet ist. Das Werkstück 5 ist identisch mit dem Werkstück 2 des vorangegangenen Ausführungsbeispieles. Bei dem Werkstück 6 handelt es sich um den Deckel zum Verschließen der Vertiefungen V, der im Unterschied zu dem Deckel 3 unterseitig Elektroden E trägt. Die Elektroden E sind bis zu einigen Vertiefungen V geführt, damit in den durch die Vertiefungen V bei dem Mikrofluidelement 4 gebildeten Kanälen Messungen, beispielsweise zur Leitfähigkeit des in einem solchen Kanal geführten Fluids, durchgeführt werden können. Die beiden Werkstücke 5, 6 sind auf dieselbe Art und Weise miteinander zur Ausbildung des Mikrofluidelements 4 verbunden worden wie in den Figuren 2 bis 5 beschrieben. Aus der Beschreibung des Verbindungsverfahrens wird deutlich, daß bei diesem nicht die Gefahr besteht, daß die eine Seitenwand bereichsweise ausbildenden Oberflächen der Elektroden E beschädigt oder beschichtet werden.

Das erfindungsgemäße Verbindungsverfahren kann als Schmelzklebeverfahren aufgefaßt werden, bei dem der Schmelzkleber durch strahlungsinduzierten Molekulargewichtsabbau in einer Randschicht aus dem zu verbindenden Basismaterial der Werkstücke selbst erzeugt wird.

### Bezugszeichenliste

- 1: Mikrofluidelement
- 2: Werkstück
- 3: Werkstück
- 4: Mikrofluidelement
- 5: Werkstück
- 6: Werkstück

- E: Elektrode
- K: Kontaktfläche
- R, R': modifizierte Randschicht
- S: Steg
- U: Unterseite
- V: Vertiefung

## Patentansprüche

1. Verfahren zum fremdstofffreien Verbinden von zwei aneinander grenzenden Werkstücken (2, 3; 5, 6) aus Kunststoff, wobei jedes Werkstück eine vorgesehene Kontaktfläche aufweist, über die die Werkstücke verbunden werden, und wobei mindestens ein Werkstück in der Kontaktfläche Mikro- und/oder Nanostruktur-Vertiefungen aufweist, **dadurch gekennzeichnet, daß**
- die vorgesehene Kontaktfläche (K) zumindest eines der beiden Werkstücke (2, 5; bzw. 3, 6), mit der dieses in der Verbindung an das andere Werkstück (3, 6 bzw. 2, 5) grenzt, wenigstens bereichsweise einer solchen energiereichen Strahlung ausgesetzt wird, daß die Glasübergangstemperatur in einer Randschicht (R, R') abgesenkt wird,
- die beiden Werkstücke (2, 3; 5, 6) in ihre bestimmungsgemäße Position zueinander gebracht werden und
- anschließend zum Herstellen der Verbindung der beiden Werkstücke (2, 3; 5, 6) zumindest die durch den Bestrahlungsvorgang jeweils modifizierte Randschicht (R, R') wenigstens im Bereich ihrer Oberfläche auf eine Temperatur erwärmt wird, die oberhalb der Glasübergangstemperatur der durch die Bestrahlung modifizierten. Randschicht (R, R'), jedoch unterhalb der Glasübergangstemperatur der diesbezüglich unmodifizierten Bereiche des jeweiligen Werkstückes (2, 3; 5, 6) liegt, so daß die Mikro- und/oder Nanostruktur-Vertiefungen ihre Formstobilität beibehalten.

2. Verfahren nach Anspruch 1, **dadurch gekennzeichnet, daß** die gesamte Kontaktfläche (K) dem energiereichen Bestrahlungsprozess unterworfen wird.

3. Verfahren nach Anspruch 1 oder 2, **dadurch gekennzeichnet, daß** der Schritt des Erwärmens erfolgt, wenn die beiden Werkstücke (2, 3; 5, 6) unter einen zueinander gerichteten Pressdruck gestellt sind.

4. Verfahren nach einem der Ansprüche 1 bis 3, **dadurch gekennzeichnet, daß** die beiden in ihre bestimmungsgemäße Position zueinander gebrachten Werkstücke (2, 3; 5, 6) zum Herstellen der Verbindung erwärmt werden.

5. Verfahren nach einem der Ansprüche 1 bis 4, **dadurch gekennzeichnet, daß** die Kontaktflächen von beiden Werkstücken (2, 3) durch die energiereiche Strahlung zum Ausbilden jeweils einer modifizierten Randschicht (R, R') bestrahlt werden.

6. Gegenstand (1, 4) gebildet aus zumindest zwei, miteinander fremdstofffrei verbundenen Werkstücken (2, 3; 5, 6), hergestellt nach einem der vorangegangenen Ansprüche, **dadurch gekennzeichnet, daß** die modifizierte Randschicht in zumindest einer Kontaktfläche (K) der beiden Werkstücke (2, 5) nur Bruchteile eines µm beträgt.

7. Gegenstand nach Anspruch 6, **dadurch gekennzeichnet, daß** zumindest eines der beiden Werkstücke (6) auf seiner Kontaktfläche befindliche Elektroden (E), insbesondere strukturierte Dünnschichtelektroden aufweist.

8. Gegenstand nach Anspruch 7, **dadurch gekennzeichnet, daß** die auf der Kontaktfläche befindlichen Elektroden (E) dem einen Werkstück (6) und die kanalartigen Vertiefungen (V) dem anderen Werkstück (5) zugeordnet sind und die Elektroden zumindest bereichsweise eine Wand einer verschlossenen Vertiefung (V) nach dem Verbinden der beiden Werkstücke (5, 6) bilden.

9. Gegenstand nach einem der Ansprüche 6 oder 7, **dadurch gekennzeichnet, daß** zumindest eines der beiden Werkstücke als mikro- und/oder nanostrukturiertes Filter ausgebildet wird.

10. Verwendung eines Gegenstandes nach einem der Ansprüche 6 bis 9, **dadurch gekennzeichnet, daß** dieser als Mikroanalyseeinheit und/oder Mikroreaktoreinheit eingesetzt ist.

## Claims

1. Method for bonding two contiguous plastic work pieces (2, 3; 5, 6) without using foreign matter, wherein each work piece comprises an intended contact surface through which the work pieces are to be connected, and wherein at least one work piece comprises microstructure and/or nanostructure recesses in the contact surface, **characterized in that**
― the intended contact surface (K) of at least one of the two work pieces (2, 5 or 3, 6) by which it borders on the other work piece (3, 6 or 2, 5) is at least in some sections subjected to a high-energy radiation which causes the lowering of the glass transition temperature in a marginal layer (R, R'),
― the two work pieces (2, 3; 5, 6) are brought into a mutual position according to the intended use, and
― subsequently, to produce the bond of the two work pieces (2, 3; 5, 6) at least the modified marginal layer (R, R') in the area of its surface is heated to a temperature which is above the glass transition temperature of the marginal layer (R, R') modified by radiation, but below that of the unmodified areas of the respective work piece (2, 3; 5, 6) so that the microstructure and/or nanostructure recesses maintain their dimensional stability.

2. Method according to claim 1, **characterized in that** the entire contact surface (K) is subjected to the high-energy radiation process.

3. Method according to claim 1 or 2, **characterized in that** the step of heating is performed while the two work pieces (2, 3; 5, 6) are under pressure in relation to each other.

4. Method according to one of claims 1 to 3, **characterized in that** the two work pieces (2, 3; 5, 6) brought into a mutual position according to their intended use are heated to accomplish the bond.

5. Method according to one of claims 1 to 4, **characterized in that** the contact surfaces of the two work pieces (2, 3) are radiated with high-energy radiation for the formation of a modified marginal layer (R, R') on each.

6. Article (1, 4) formed of two work pieces (2, 3; 5, 6) bonded together without using foreign matter, produced according to one of the preceding claims, **characterized in that** the modified marginal layer in at least one contact surface (K) of the two work pieces (2, 5) is only fractions of a µm.

7. Article according to claim 6, **characterized in that** at least one of the two work pieces (6) is provided with electrodes (E), in particular with structured thin-film electrodes, on its contact surface.

8. Article according to claim 7, **characterized in that** the electrodes (E) on the contact surface and the channel-like recesses (V) are assigned to the other work piece (5), and that the electrodes in at least some sections form a wall of a closed recess (V) after the two work pieces (5, 6) are bonded.

9. Article according to one of claims 6 or 7, **characterized in that** at least one of the two work pieces is designed as a microstructured and/or nanostructured filter.

10. Use of an article according to one of claims 6 to 9, **characterized in that** at this article is used as a microanalysis unit and/or a nucroreactor unit.

## Revendications

1. Procédé pour relier sans matière étrangère deux pièces (2, 3 ; 5, 6) adjacentes en matière plastique, chaque pièce présentant une surface de contact prévue par lesquelles les pièces sont reliées, et au moins une pièce présentant dans la surface de contact des creux à microstructure et/ou à nanostructure,
**caractérisé en ce que**
- la surface de contact (K) prévue d'au moins l'une des deux pièces (2, 5 ou 3, 6) par laquelle celle-ci avoisine dans la jonction l'autre pièce (3, 6 ou 2, 5) est au moins partiellement exposée à un rayonnement suffisamment énergétique que la température de transition vitreuse est baissée dans une couche marginale (R, R'),
- les deux pièces (2, 3 ; 5, 6) sont amenées dans leur position l'une par rapport à l'autre qui leur est destinée, et
- pour réaliser la jonction des deux pièces (2, 3 ; 5, 6), au moins la couche marginale (R, R') respectivement modifiée par le processus de rayonnement est ensuite chauffée, au moins dans la zone de sa surface, à une température supérieure à la température de transition vitreuse de la couche marginale (R, R') modifiée par le rayonnement, mais inférieure à la température de transition vitreuse des zones non modifiées de la pièce (2, 3 ; 5, 6) respective, de sorte que les creux à microstructure et/ou à nanostructure conservent leur stabilité de forme.

2. Procédé selon la revendication 1,
**caractérisé en ce que** toute la surface de contact (K) est soumise au processus de rayonnement à grande énergie.

3. Procédé selon la revendication 1 ou 2,
**caractérisé en ce que** l'étape de chauffage est effectuée lorsque les deux pièces (2, 3 ; 5, 6) se trouvent sous une pression de compression dirigée l'une vers l'autre.

4. Procédé selon l'une quelconque des revendications 1 à 3,
**caractérisé en ce que** les deux pièces (2, 3 ; 5, 6) amenées dans leur position l'une par rapport à l'autre qui leur est destinée sont chauffées pour réaliser la jonction.

5. Procédé selon l'une quelconque des revendications 1 à 4,
**caractérisé en ce que** les surfaces de contact des deux pièces (2, 3) sont exposées au rayonnement à grande énergie pour former respectivement une couche marginale (R, R') modifiée.

6. Objet (1, 4) formé à partir d'au moins deux pièces (2, 3 ; 5, 6) reliées l'une à l'autre sans matière étrangère, réalisé selon l'une quelconque des revendications précédentes,
**caractérisé en ce que** la couche marginale modifiée dans au moins une surface de contact (K) des deux pièces (2, 5) ne présente que des fractions d'un µm.

7. Objet selon la revendication 6,
**caractérisé en ce qu'**au moins l'une des deux pièces (6) présente des électrodes (E) situées sur sa surface de contact, en particulier des électrodes à couche mince structurées.

8. Objet selon la revendication 7,
**caractérisé en ce que** les électrodes (E) situées sur la surface de contact sont associées à une pièce (6) et les creux (V) en forme de canaux à l'autre pièce (5), et les électrodes forment au moins partiellement une paroi d'un creux (V) fermé après la jonction des deux pièces (5, 6).

9. Objet selon l'une quelconque des revendications 6 ou 7,
**caractérisé en ce qu'**au moins l'une des deux pièces présente la forme d'un filtre à microstructure et/ou à nanostructure.

10. Utilisation d'un objet selon l'une quelconque des revendications 6 à 9,
**caractérisée en ce que** celui-ci est utilisé comme unité de microanalyse et/ou comme microréacteur.
